# EUROPÄISCHE PATENTSCHRIFT

(11) **EP 4 324 770 B1**
(45) Veröffentlichungstag und Bekanntmachung des Hinweises auf die Patenterteilung: **14.10.2026**
(21) Anmeldenummer: 23191094.4
(22) Anmeldetag: 11.08.2023
(51) Int. Cl.: B65G 43/08, B65B 35/36, B65B 35/44, B65G 47/08, B65G 47/53, B65G 47/32, B65G 47/84, B65G 47/91, B65G 47/68, B65B 5/04, B65B 5/06

(54) **VORRICHTUNG ZUR GETAKTETEN ÜBERFÜHRUNG VON OBJEKTEN**
DEVICE FOR CLOCKED TRANSFER OF OBJECTS
DISPOSITIF DE TRANSFERT CADENCÉ D'OBJETS

(30) Priorität: 18.08.2022 DE 102022003027
(43) Veröffentlichungstag der Anmeldung: 21.02.2024
(73) Patentinhaber: Heino Ilsemann GmbH, 28279 Bremen (DE)
(72) Erfinder: Köster, Jens, 28357 Bremen (DE)
(74) Vertreter: Manasse, Uwe

(56) Entgegenhaltungen:
- EP-A1- 3 689 759
- WO-A1-2006/015656
- WO-A1-2021/185633
- US-A1- 2005 265 815
- US-A1- 2016 362 208

## Beschreibung

Die Erfindung betrifft eine Vorrichtung zur getakteten Überführung von Objekten zu einer Abfördereinrichtung.

Eine derartige Vorrichtung ist bereits bekannt aus der Druckschrift WO 2021/185633 A1, die den Oberbegriff des Anspruchs 1 offenbart.

Bei der Verarbeitung von Objekten, wie beispielweise bei der Verpackung bzw.

Kartonierung von gestanzten Blisterverpackungen kommt es auf hohe Verarbeitungsgeschwindigkeiten bei minimaler Fehlerrate an. Die Aufgabe der Erfindung besteht darin, eine derartige Vorrichtung im Blick auf diese beiden Aspekte zu verbessern.

Die Vorrichtung umfasst eine erste Transporteinrichtung, die zur Annahme von jeweils einer Gruppe, bestehend aus einer bestimmten Anzahl, von Objekten und zum Transport der Objekte in einer ersten Transportrichtung und zur gesteuerten Abgabe der Objekte an eine unter der ersten Transporteinrichtung angeordnete zweite Transporteinrichtung ausgebildet ist, wobei die zweite Transporteinrichtung mehrere parallel und nebeneinander angeordnete Transportbahnen zum taktweisen Transport der Objekte in einer quer zu der ersten Transportrichtung angeordneten zweiten Transportrichtung aufweist, wobei die Anzahl der Transportbahnen größer als die oder gleich der bestimmte(n) Anzahl von Objekten je Gruppe ist.

Die Vorrichtung kann eine Übergabeeinrichtung umfassen, die zum taktweisen Erfassen jeweils einer Gruppe, besteht aus einer bestimmten Anzahl, von Objekten gleichzeitig an einem Abgabeende einer Anliefereinrichtung und zum taktweisen Übergeben der Gruppe von erfassten Objekten an die erste Transporteinrichtung ausgebildet ist. Bei der Anliefereinrichtung kann es sich insbesondere, wie bereits erwähnt, um eine Stanzeinrichtung handeln, die gestanzte Blisterverpackungen bereitstellt, welche beispielsweise mit Tabletten o.ä. befüllt sind.

Die erste Transporteinrichtung ist für jede Transportbahn der zweiten Transporteinrichtung mit einer gesteuerten Abgabeeinrichtung zum Abgeben jeweils eines Objekts von der ersten Transporteinrichtung an eine bestimmte Transportbahn der zweiten Transporteinrichtung versehen. Insbesondere ist jeweils eine Abgabeeinrichtung über der betreffenden Transportbahn angeordnet, so daß ein abzugebendes Objekt nach einer Abgabebetätigung auf die Transportbahn fällt.

Die zweite Transporteinrichtung ist zum taktweisen Transport aller Transportbahnen gleichzeitig um einen bestimmten Transportweg in der zweiten Transportrichtung ausgebildet, nachdem von mindestens einer oder jeder Transportbahn jeweils ein Objekt aufgenommen worden ist, wobei ein Transport einer sich in der ersten Transportrichtung erstreckenden Reihe von aufgenommenen Objekten erfolgt. Die Reihe kann die bestimmte Anzahl von Objekten einer Gruppe oder weniger umfassen.

Über der zweiten Transporteinrichtung ist eine Abfördereinrichtung zum Abfördern von Objekten angeordnet, die für eine kontinuierliche oder getaktete Transportbewegung mit einer vorgegebenen Abfördergeschwindigkeit quer zu der zweiten Transportrichtung ausgebildet ist, wobei die Abfördereinrichtung mit schachtförmigen Aufnahmebereichen zur Aufnahme jeweils eines Objekts oder jeweils eines Stapels von Objekten versehen ist.

Weiterhin umfasst die Vorrichtung eine in drei Raumrichtungen gesteuert verfahrbare Greifeinrichtung, die zum gleichzeitigen Ergreifen einer Anzahl oder einer Gruppe von quer zu der zweiten Transportrichtung auf den Transportbahnen der zweiten Transporteinrichtung nebeneinander befindlichen Objekten und zum Übergeben der Anzahl oder der Gruppe von Objekten auf einen Abschnitt der Abfördereinrichtung unter Ausführen einer Bewegung entlang der Transportbewegung der Abfördereinrichtung ausgebildet ist, wobei der Abschnitt eine der Anzahl von Objekten in der Gruppe entsprechende Anzahl von schachtförmigen Aufnahmebereichen umfassen kann und die Greifeinrichtung für eine einfache oder mehrfache Übergabe einer Anzahl oder Gruppe von Objekten an den Abschnitt der Abfördereinrichtung ausgebildet ist, so dass in den Aufnahmebereichen der Abfördereinrichtung entweder eine Reihe von nebeneinander befindlichen Objekten oder eine Reihe von nebeneinander befindlichen Stapeln von Objekten bildbar ist.

Die Vorrichtung umfasst ferner eine Überführungssteuerung, die mit der ersten und zweiten Transporteinrichtung und der Greifeinrichtung verbunden ist, zum Steuern der getakteten Überführung. Die Überführungssteuerung kann über einen der Abfördereinrichtung zugeordneten Sensor und/oder über eine der Abfördereinrichtung zugeordnete zweite Steuerung Positionsinformationen der Abfördereinrichtung und/oder Geschwindigkeitsinformationen der kontinuierlichen oder getakteten Transportbewegung der Abfördereinrichtung enthalten. Alternativ kann die Taktfolge der Gruppe von Objekten auf der ersten Transporteinrichtung bzw. die Taktgeschwindigkeit der Übergabeeinrichtung in einem festgelegten Verhältnis zu der Abfördergeschwindigkeit stehen.

Die Vorrichtung kann eine Erkennungseinrichtung zum Erkennen defekter Objekte an der ersten Transporteinrichtung umfassen, beispielsweise zum Erkennen von nicht oder nur teilweise befüllten Blisterverpackungen, und eine über die Erkennungseinrichtung gesteuerte Abstoßeinrichtung zum Entfernen defekter Objekte von der ersten Transporteinrichtung, wobei die Abgabe der verbleibenden Objekte einer Gruppe an die zweite Transporteinrichtung so gesteuert ist, dass durch die Entfernung defekter Objekte entstehende Lücken bei der Abgabe an die zweite Transporteinrichtung übersprungen werden und durch auf der ersten Transporteinrichtung folgende Objekte ausgefüllt werden, wobei jede Transportbahn der zweiten Transporteinrichtung mit einem Objekt belegt wird, bevor ein taktweiser Transport in der zweiten Transportrichtung erfolgt.

Die Überführungseinrichtung kann auch mit der Übergabeeinrichtung und/oder der Erkennungseinrichtung, somit vorhanden, verbunden sein.

Die erste Transporteinrichtung kann als Sauggurt oder Magnetgurt ausgebildet sein.

Die Transportbahnen der zweiten Transporteinrichtung können als Taschengurte ausgebildet sein.

Die Transportbahnen der zweiten Transporteinrichtung können, auf der der ersten Transporteinrichtung abgekehrten Seite der Abfördereinrichtung eine erste Abnahmereihe und eine in der zweiten Transportrichtung dahinter angeordnete zweite Abnahmereihe von Objekten bilden, von denen jeweils eine Gruppe von Objekten mittels der Greifeinrichtung gleichzeitig entnehmbar sind.

Die der ersten Transporteinrichtung zugeordneten Abgabeeinrichtungen zum Abgeben jeweils eines Objekts an eine bestimmte Transportbahn der zweiten Transporteinrichtung können als Abschläger ausgebildet sein, um jeweils ein Objekt von der ersten Transporteinrichtung abzulösen, so daß es auf die zweite Transportbahn fallen kann.

Zwischen der ersten Transporteinrichtung und der Abfördereinrichtung kann über der zweiten Transporteinrichtung eine sich quer zu der zweiten Transportrichtung erstreckende Reihe von Pufferschächten angeordnet sein, deren Anzahl der bestimmten Anzahl von Objekten einer Gruppe entspricht und, die jeweils zur Aufnahme eines Objekts oder eines Stapels von Objekten ausgebildet sind.

Die Greifeinrichtung umfaßt einen in drei zueinander senkrechten Raumrichtungen (x, y, z) gesteuert verfahrbaren Greiferschlitten, der entlang einer Traverse linear in einer ersten Raumrichtung (x) längsverschieblich geführt ist, wobei die Traverse linear in einer zweiten Raumrichtung (y) längsverschieblich an jeweils einer Längsführung eines Gestells geführt ist, wobei an der Traverse jeweils endseitig zwei erste, in y-Richtung beabstandete Umlenkmittel und an jeder Längsführung jeweils endseitig ein zweites Umlenkmittel angeordnet sind und ein endloser erster Antriebsstrang in y-Richtung um die zweiten Umlenkmittel herum und in x-Richtung um die und zwischen den ersten Umlenkmitteln herum geführt ist, wobei an der Traverse ferner jeweils endseitig zwei dritte, in y-Richtung beabstandete Umlenkmittel angeordnet sind und an jeder Längsführung jeweils endseitig ein viertes Umlenkmittel angeordnet sind und ein endloser zweiter Antriebsstrang in y-Richtung um die vierten Umlenkmittel herum und in x-Richtung um die und zwischen den dritten Umlenkmitteln herum geführt ist, wobei an dem Greiferschlitten eine in der dritten Raumrichtung (z) gesteuert verfahrbare Greiferhalterung geführt ist, an der ein Greiferarm zum Ergreifen einer Gruppe von Objekten gehalten ist und die über ein Vertikalgetriebe mit dem zweiten Antriebsstrang gekoppelt und durch dessen Bewegung in der dritten Raumrichtung (z) verfahrbar ist, ein erstes gesteuertes Antriebsmittel zum Antreiben des ersten Antriebsstrangs im Bereich eines der zweiten Umlenkmittel an einer Seite der Traverse, ein zweites gesteuertes Antriebsmittel zum Antreiben des ersten Antriebsstrangs im Bereich eines anderen der zweiten Umlenkmittel an einer anderen Seite der Traverse, wobei ein synchron gleichsinniges Antreiben der Bereiche des ersten Antriebsstrangs eine Bewegung des Greiferschlittens in x-Richtung relativ zu der Traverse und ein synchron gegensinniges Antreiben eine Bewegung der Traverse in y-Richtung bewirkt, ein drittes Antriebsmittel zum Antreiben des zweiten Antriebsstrangs und eine Greifersteuerung zum koordinierten Ansteuern der drei Antriebsmittel und zum gezielten dreidimensionalen Verfahren des Greiferarms.

Das Vertikalgetriebe kann durch eine vertikal an dem Greiferschlitten gehaltene Kugelumlaufspindel gebildet sein.

Bevorzugt sind die Antriebsmittel gestellfest angeordnet, so daß sie be einer Verfahrbewegung der Traverse und/oder des Greiferschlittens nicht bewegt werden müssen. Die Antriebsstränge sind vorzugsweise Zahnriemen oder Ketten.

Der Greiferarm kann als Saug- oder Magnetgreifer ausgebildet sein, mit dem eine Gruppe von Objekten gleichzeitig erfassbar und an die Abfördereinrichtung übergebbar ist.

Die Abfördereinrichtung kann zum Transportieren der Aufnahmebereiche zu einer Verpackungs- oder Kartoniereinrichtung ausgebildet sein, von der jedes Objekt oder jeder Stapel von Objekten in eine Verpackung eingebracht wird, bspw. in einen Karton oder eine Faltschachtel, und die Verpackung verschlossen wird.

Die Überführungssteuerung ist zum Ausführen eines Verfahrens zum Überführen von Objekten zu einer Abfördereinrichtung ausgebildet, mit den Schritten:
- Annehmen von jeweils einer Gruppe, bestehend aus einer bestimmten Anzahl, von Objekten mittels einer ersten Transporteinrichtung und Transportieren der Objekte in einer ersten Transportrichtung,
- gesteuertes Abgeben der Objekte nacheinander jeweils an eine Transportbahn einer unter der ersten Transporteinrichtung angeordneten zweiten Transporteinrichtung, die mehrere parallel und nebeneinander angeordnete Transportbahnen aufweist, wobei die Anzahl der Transportbahnen größer als die oder gleich der bestimmte(n) Anzahl von Objekten je Gruppe ist,
- taktweises Transportieren der Anzahl von Objekten auf den Transportbahnen der zweiten Transporteinrichtung in einer quer zu der ersten Transportrichtung weisenden zweiten Transportrichtung,
- Ergreifen der Anzahl von Objekten auf der zweiten Transporteinrichtung durch gezieltes Ansteuern einer Greifeinrichtung und Ablegen der Anzahl von Objekten auf einem Abschnitt der Abfördereinrichtung, die über der zweiten Transporteinrichtung angeordnet ist und mit einer Abfördergeschwindigkeit in einer quer zu der zweiten Transportrichtung weisenden Abförderrichtung kontinuierlich angetrieben ist, wobei der Schritt des Ergreifens und Ablegens der Anzahl von Objekten ein- oder mehrfach je Abschnitt der Abfördereinrichtung ausgeführt wird, um auf der Abfördereinrichtung eine sich in der Abförderrichtung erstreckende Reihe von Objekten oder eine Reihe von Stapeln von Objekten zu bilden.

Die Überführungssteuerung kann zum Erhalt von Informationen, etwa von einem Sensor oder einer optischen Überwachungseinrichtung, ausgebildet sein, um zu erkennen, ob fehlerhafte Objekte vorhanden sind, und um eine Abstoßeinrichtung zu aktivieren, um ein oder mehrere fehlerhafte Objekte innerhalb einer Gruppe von übergebenen Objekten von der ersten Transporteinrichtung zu entfernen.

Die Überführungssteuerung kann ferner ausgebildet sein, um eine von der ersten Transporteinrichtung transportierte Anzahl von Objekten, bei denen es sich um eine Gruppe von Objekten handelt, aus der mindestens eines als fehlerhaft erkannt und entfernt wurde, entweder in der Reihenfolge des Transports auf der ersten Transportrichtung oder in umgekehrter Reihenfolge an einzelne Transportbahnen der zweiten Transporteinrichtung abzugeben.

Allgemein gilt, dass die Überführungssteuerung für die letztliche Entscheidung, welches Objekt an welche Transportbahn abgegeben wird, ausgebildet ist.

Die Überführungssteuerung kann zusätzlich als vorgelagerte Schritte
- taktweises Erfassen jeweils einer Gruppe, bestehend aus einer bestimmten Anzahl, von Objeken gleichzeitig an einem Abgabeende einer Anliefereinrichtung, und
- taktweises Übergeben der Gruppe von erfassten Objekten an die erste Transporteinrichtung
umfassen, sofern die Vorrichtung eine Übergabeeinrichtung zum Übergeben von Objekten von einer Anliefereinrichtung an die erste Transporteinrichtung umfasst.

Weitere Vorteile und Merkmale der Erfindung ergeben sich aus der nachfolgenden Beschreibung eines Ausführungsbeispiels, wobei auf eine Zeichnung Bezug genommen wird, in der

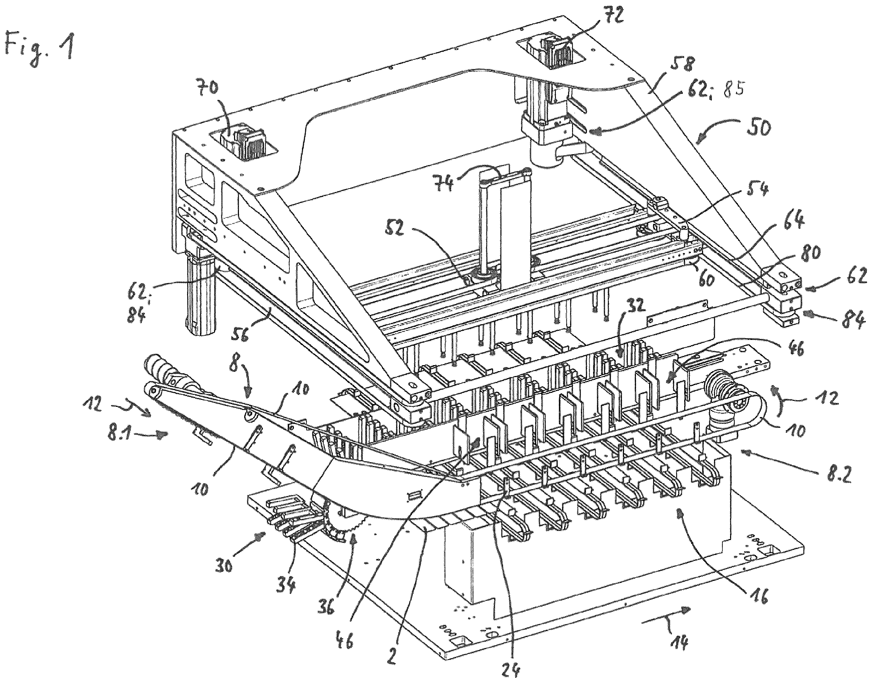

Fig. 1 eine schematische perspektivische Ansicht einer erfindungsgemäßen Vorrichtung zur getakteten Überführung von Objekten zu einer Abfördereinrichtung zeigt,

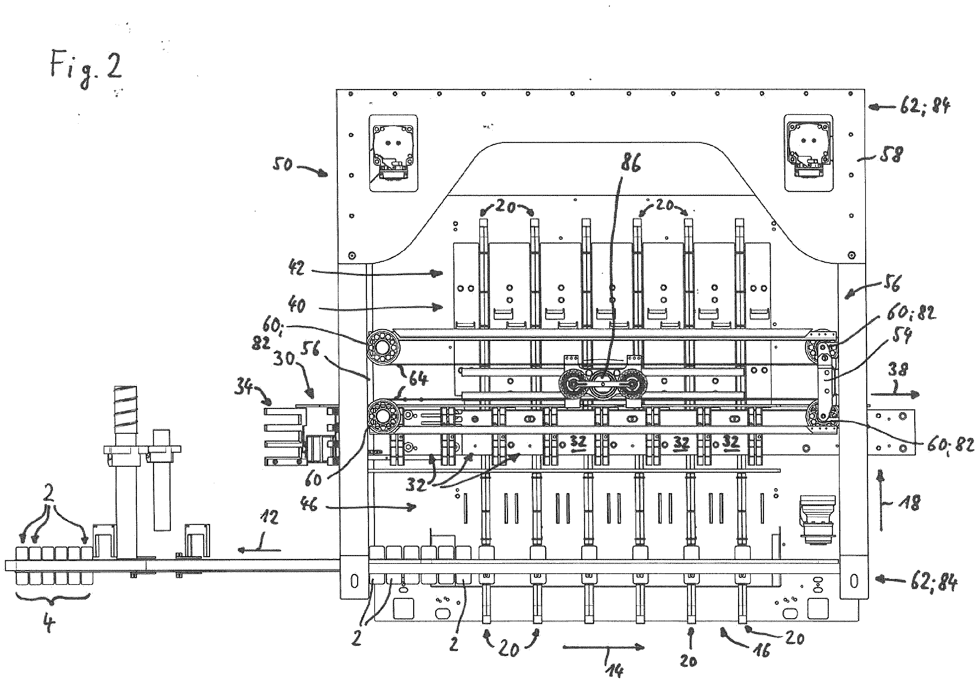

Fig. 2 eine schematische Draufsicht auf die Vorrichtung nach Fig. 1 zeigt, und

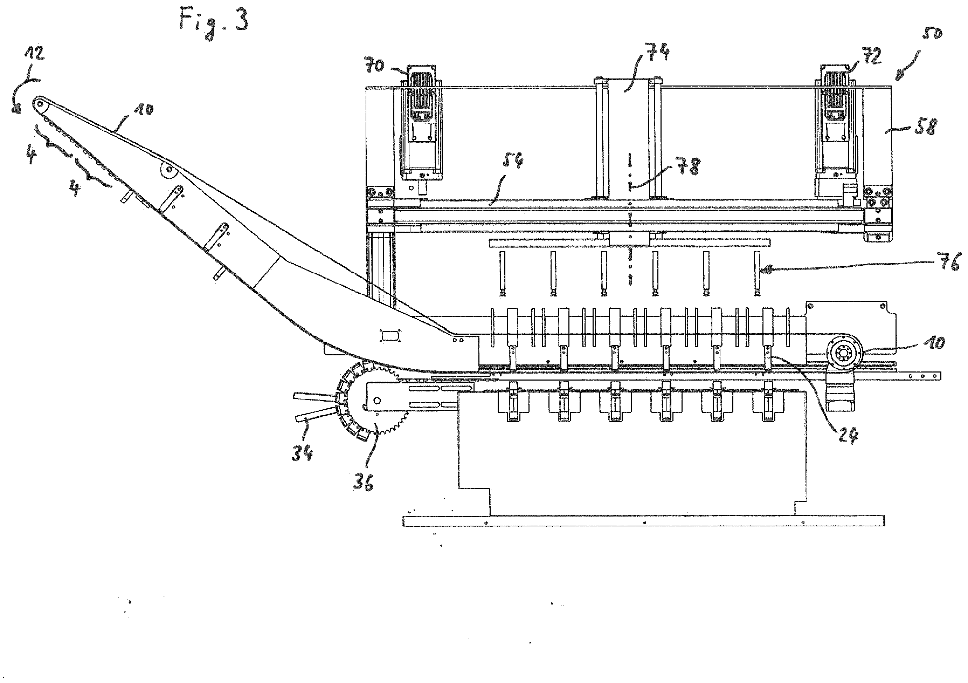

Fig. 3 eine schematische Vorderansicht der Vorrichtung nach Fig. 1 und 2 zeigt.

Die in der Zeichnung dargestellte Vorrichtung befasst sich mit einem Anwendungsfall der Erfindung, bei dem ausgestanzte Blisterverpackungen von einer Blistermaschine zu übernehmen sind, fehlerhafte wie beispielsweise nicht vollständig gefüllte Blisterverpackungen auszuschleusen sind und aus den fehlerfreien Blisterverpackungen Stapel in einer Produktkette einer Verpackungsmaschine bzw. eines Kartonierers zu bilden sind.

Die Anlieferung von Objekten, bei denen es sich jeweils insbesondere um Blisterverpackungen handelt, von einer Anliefereinrichtung mittels eines dreidimensional gesteuerten Übergabearms zur taktweisen Übergabe einer Gruppe von Objekten, die jeweils aus einer bestimmten Anzahl von Objekten besteht, beispielsweise 6 Objekte, ist nicht im Einzelnen dargestellt, da eine solche Übergabe im Stand der Technik hinreichend bekannt ist.

Insbesondere von einer Blistermaschine kommend, werden die Blister Verpackungen bzw. Objekte 2 jeweils taktweise in Gruppen 4, die jeweils aus einer vorbestimmten Anzahl von Objekten 2 bestehen, hier beispielhaft aus sechs Objekten, an eine erste Transporteinrichtung 8 übergeben. Die erste Transporteinrichtung 8 umfasst im Wesentlichen einen endlos umlaufend geführten Sauggurt 10. Dargestellt sind Gruppen 4 von jeweils sechs Objekten 2, die von dem Sauggurt 10 gehalten und von diesem transportiert werden.

Eine wie ausgeführt nicht dargestellte Übergabeeinrichtung zum taktweisen erfassen jeweils einer Gruppe von Objekten gleichzeitig an einem Abgabeende einer Anliefereinrichtung und zum taktweisen Übergeben der Gruppe an die erste Transporteinrichtung befindet sich benachbart zu einem Übergabebereich 8.1 der ersten Transporteinrichtung, in dem der Sauggurt 10 in dem dargestellten Ausführungsbeispiel schräg geneigt verläuft. In Umlaufrichtung 12 des Sauggurts gesehen schließt sich an den Übergabebereich 8.1 ein Abgabebereich 8.2 an, in dem der Sauggurt 10 horizontal und in einer ersten Transportrichtung 14 verläuft.

Unter dem Abgabebereich 8.2 befindet sich eine zweite Transporteinrichtung 16, die eine Anzahl von quer zu der ersten Transportrichtung 14 in einer zweiten Transportrichtung 18 angeordneten Transportbahnen 20 aufweist, wobei die Anzahl der Transportbahnen 20 gleich der Anzahl von Objekten 2 in einer Gruppe 4 ist, d.h. in dem dargestellten Beispiel sechs.

Die erste Transporteinrichtung 8 ist im Übergabebereich 8.1 mit geeigneten Sensoren zur Erfassung von fehlerhaften Objekten, bspw. nicht vollständig gefüllten Blisterverpackungen, versehen, sowie mit einer Abschlageinrichtung, mit der als fehlerhaft erkannte Objekte gezielt von dem Sauggurt 10 abgeschlagen, d.h. entfernt werden können, so dass im Abgabebereich 8.2 ausschließlich fehlerfreie Objekte eintreffen, möglicherweise mit Lücken innerhalb einer Gruppe, die den entfernten Objekten entsprechen.

Weiterhin ist die erste Transporteinrichtung 8 im Abgabebereich 8.2 jeweils oberhalb einer jeden Transportbahn 20 mit einer gesteuerten Abgabeeinrichtung 24 versehen, um jeweils ein Objekt 2 von dem Sauggurt 10 zu lösen und im freien Fall auf die darunter befindliche Transportbahn 20 zu überführen.

Die Transportbahnen 20 sind als Taschengurte ausgebildet, in denen durch geeignete Abstandselemente jeweils Taschen mit passenden Abmessungen gebildet werden, um jeweils ein Objekt aufzunehmen. Die von dem Sauggurt 10 gehaltenen Objekte werden der Reihe nach, oder in einer von einer Übergabesteuerung vorgegebenen Reihenfolge, den sechs Abgabeeinrichtungen 24 über den einzelnen Taschengurten zugeordnet. Sobald ein Objekt die ihm zugeordnete Abgabeeinrichtung 24 erreicht hat, wird es in die darunter liegende Tasche des Taschengurts bzw. der Transportbahn 20 abgeschlagen.

Sobald auf diese Weise alle Taschen auf den sechs Transportbahnen 20, die in der ersten Transportrichtung 14 nebeneinander und unter den Sauggurt 10 liegen, jeweils mit einem Objekt 2 belegt sind, wird die zweite Transporteinrichtung 16 um einen Transportschritt und um einen festgelegten Transportweg in der zweiten Transportrichtung 18 weitergeschaltet. Die Größe des Transportwegs hängt von der tatsächlichen Größe der transportierten Objekte 2 ab und ist ersichtlich mindestens so groß wie deren Abmessung quer zur ersten Transportrichtung 14 bzw. in der zweiten Transportrichtung 18 gesehen, zuzüglich eines Maßes für die Abstandselemente einer Tasche des Taschengurts.

Unmittelbar nach einem Transporttakt in der zweiten Transportrichtung 18 stehen unter dem Sauggurt 10 wieder eine neue Reihe von sechs leeren Taschen zur Aufnahme einer weiteren Gruppe von Objekten 2 bereit.

Über der zweiten Transporteinrichtung 16 ist eine Abfördereinrichtung 30 zum Abfördern von Objekten 2 angeordnet, die für eine kontinuierliche Transportbewegung mit einer vergebenen Abfördergeschwindigkeit in einer Abförderrichtung 38 quer zu der zweiten Transportrichtung 18 ausgebildet ist, wobei die Abfördereinrichtung 30 mit einer kontinuierlichen Anordnung von schachtförmigen Aufnahmenbereichen 32 zur Aufnahme jeweils eines Objekts 2 oder jeweils eines Stapels von Objekten 2 versehen ist. Die schachtförmigen Aufnahmebereiche 32 werden beispielhaft durch jeweils zwei Reihen von Begrenzungsfingern 34 gebildet, die auf einem endlos umlaufenden band- oder kettenartigenElement gehalten sind. An einer endseitigen Umlenkung 36 werden das umlaufende Element und die Begrenzungsfinger umgelenkt, und die Begrenzungsfinger bilden innerhalb eines Abschnitts der Abfördereinrichtung eine Anzahl schachtförmigen Aufnahmebereichen, die der Anzahl von Objekten je Gruppe entspricht (hier sechs).

Die zweite Transporteinrichtung 16 erstreckt sich in der zweiten Transportrichtung 18 gesehen über die Position der Abfördereinrichtung 30 hinaus, so dass die Transportbahnen 20 der zweiten Transporteinrichtung auf der der ersten Transporteinrichtung 8 abgekehrten Seite der Abfördereinrichtung 30 zumindest eine erste Abnahmereihe 40 und eine in der zweiten Transportrichtung 18 dahinter angeordnete zweite Abnahmereihe 42 von Taschen oder Objekten 2 bilden, wobei sich jede Abnahmereihe quer zur zweiten Transportrichtung 18 bzw. in der ersten Transportrichtung 14 erstreckt.

Zwischen der ersten Transporteinrichtung 8 und der Abfördereinrichtung 30 ist über der zweiten Transporteinrichtung 16 eine Reihe von sich quer zu der zweiten Transportrichtung 18 erstreckende Reihe von Pufferschächten 46 angeordnet, deren Anzahl der vorbestimmten Anzahl von Objekten je Gruppe entspricht. Die Pufferschächte sind jeweils zur Aufnahme eines Objekts oder eines Stapels von Objekten vorgesehen, so dass die nachfolgend beschriebene Greifeinrichtung jeweils eine Gruppe von Objekten entweder von der ersten Abnahmereihe 40, von der zweiten Abnahmereihe 42 oder von der Reihe von Pufferschächten 46 entnehmen kann.

Die Vorrichtung umfasst weiterhin eine in drei Raumrichtungen gesteuert verfahrbare Greifeinrichtung 50 zum gleichzeitigen Ergreifen einer Gruppe von Objekten und zum Übergeben der Objekte nebeneinander auf einen vorstehend beschriebenen Abschnitt der Abfördereinrichtung 30, wobei eine Gruppe von Objekten alternativ von der ersten Abnahmereihe 40, der zweiten Abnahmereihe 42 oder aus den Pufferschächten 46 entnommen werden kann. Zum Übergeben der Objekte auf die Abfördereinrichtung führt die Greifeinrichtung eine Bewegung entlang der Transportbewegung der Abförderrichtung aus, in Abförderrichtung 38 und mit gleicher Geschwindigkeit wie die Abfördereinrichtung 30.

Der genannte Abschnitt der Abfördereinrichtung 30, in den eine Gruppe von Objekten oder mehrere Gruppen eingebracht werden, umfasst eine Anzahl von schachtförmigen Aufnahmebereichen 32, wobei die Anzahl gleich der Anzahl von Objekten einer Gruppe ist. Dabei ist die Greifeinrichtung für eine einfach oder mehrfache Übergabe einer Gruppe von Objekten an den Abschnitt der Abfördereinrichtung ausgebildet, so dass in den Aufnahmebereichen 32 der Abfördereinrichtung entweder eine Reihe von nebeneinander befindlichen Objekten oder eine Reihe von Stapeln von Objekten bildbar ist, während der Abschnitt der Abfördereinrichtung 30 sich mit der kontinuierlichen Transportbewegung der Abfördereinnrichtung in Abförderrichtung 38 bewegt.

Je nachdem ob in jedem Aufnahmebereich 32 der Abförderrichtung 30 nur ein einziges Objekt oder aber eine Anzahl von Objekten in Form eines Stapels einzulegen ist, ist es zweckmäßig, wenn die Geschwindigkeit der Transportbewegung der Abfördereinrichtung 30 auf die Taktgeschwindigkeit der Zuführung von Objekten 2 auf der ersten Transporteinrichtung 8 abgestimmt ist bzw. mit dieser in einem festgelegtem Verhältnis steht.

Die Greifeinrichtung 50 umfasst ein in drei zueinander senkrechten Raumrichtungen x,y,z gesteuert verfahrbaren Greiferschlitten 52, der entlang einer Traverse 54 linear in einer ersten Raumrichtung x längsverschieblich geführt ist. Die Traverse 54 ist linear in einer zweiten Raumrichtung y längsverschieblich an jeweils einer an einem Gestell 58 gehaltenen Längsführung 56 geführt. An der Traverse 54 sind jeweils endseitig zwei erste in y-Richtung beabstandete Umlenkmittel 60 und an jeder Längsführung 56 jeweils endseitig ein zweites Umlenkmittel 62 angeordnet.

Ein endloser erster Antriebstrang 64, der durch eine Kette oder einen Zahnriemen gebildet sein kann, verläuft zwischen den zweiten Umlenkmitteln 62 jeweils in y-Richtung und ist um 180 Grad um jedes zweite Umlenkmittel herum geführt, und verläuft zwischen je zwei auf gleicher y-Position befindlichen ersten Umlenkmitteln 60 in x-Richtung und ist jeweils um 90 Grad um diese herum geführt, wobei ein Abschnitt (oder zwei Endabschnitte, wobei dennoch im Ergebnis ein endloser Verlauf realisiert wird) des ersten Antriebstrangs 64 mit dem Greiferschlitten 52 verbunden ist, so dass eine Bewegung des ersten Antriebsstrangs 64 eine Bewegung der Traverse und/oder des Greiferschlittens in x- und/oder y-Richtung bewirkt.

Ein erstes gesteuertes Antriebsmittel 70 ist zum Antreiben des ersten Antriebsstrangs 64 im Bereich eines der zweiten Umlenkmittel an einer Seite der Traverse vorgesehen und vorzugweise gestellfest angeordnet. Ein zweites gesteuertes Antriebsmittel 72 ist zum Antreiben des ersten Antriebstrangs 64 im Bereich eines anderen der zweiten Umlenkmittel 62 an einer gegenüberliegenden Seite der Traverse vorgesehen und vorzugsweise gestellfest angeordnet. Bevorzugt ist jeweils eines der zweiten Umlenkmittel 62 antreibbar wobei die Antriebsmittel durch Schrittmotoren ausgebildet sein können.

Ein synchron gleichsinniges Antreiben der genannten Bereiche des ersten Antriebsstrangs 64 hat eine Bewegung des Greiferschlitten 52 in x-Richtung und ein synchron gegensinniges Antreiben eine Bewegung der Traverse 54 in y-Richtung zur Folge.

An dem Greiferschlitten 52 ist eine in der dritten Raumrichtung z gesteuert verfahrbare Greiferhalterung 74 geführt, an der ein Greiferarm 76 zum Ergreifen einer Gruppe von Objekten gehalten ist und die über ein Vertikalgetriebe 78 in z-Richtung verfahrbar ist. Zum gesteuerten Antrieb des Vertikalgetriebes 78, bei dem es sich um eine vertikal an dem Greiferschlitten 52 gehaltene Kugelumlaufspindel handeln kann, ist ein endloser zweiter Antriebstrang 80 vorgesehen. Der zweite Antriebsstrang 80 ist im Wesentlichen in gleicher Weise wie der erste Antriebstrang geführt und umgelenkt, wobei an der Traverse 54 jeweils endseitig zwei dritte in y-Richtung beabstandete Umlenkmittel 82 angeordnet sind, an gleicher Position wie die ersten Umlenkmittel 60 und lediglich in z-Richtung versetzt, und an jeder Längsführung 56 jeweils endseitig ein viertes Umlenkmittel 84 angeordnet ist, an gleicher Position wie die zweiten Umlenkmittel 62 und lediglich in z-Richtung versetzt.

Im Unterschied zum ersten Antriebsstrang ist der zweite Antriebsstrang 80 nicht mit dem Greiferschlitten verbunden, sondern um eine an dem Greiferschlitten drehbar Ein drittes Antriebsmittel 85, insbesondere ein Schrittmotor, das bevorzugt gestellfest angeordnet ist, steht mit dem zweiten Antriebsstrang 80 in Antriebsverbindung, bspw. durch Antrieb eines der vierten Umlenkmittel. Eine Greifersteuerung, die zweckmäßigerweise als Teil der Überführungssteuerung ausgebildet ist, dient zum koordinierten Ansteuern der drei Antriebsmittel und zum gezielten dreidimensionalen Verfahren des Greiferarms, und somit zum Ergreifen einer Gruppe von Objekten und Ablegen in der Abfördereinrichtung.

### Bezugszeichenliste

- 2 Objekt
- 4 Gruppe
- 8 erste Transporteinrichtung
- 10 Sauggurt
- 8.1 Übergabebereich
- 8.2 Abgabebereich
- 12 Umlaufrichtung
- 14 erste Transportrichtung
- 16 zweite Transporteinrichtung
- 18 zweite Transportrichtung
- 20 Transportbahn
- 24 Abgabeeinrichtung
- 30 Abfördereinrichtung
- 32 Aufnahmebereich
- 34 Begrenzungsfinger
- 36 Umlenkung
- 38 Abförderrichtung
- 40 erste Abnahmereihe
- 42 zweite Abnahmereihe
- 46 Pufferschacht
- 50 Greifeinrichtung
- 52 Greiferschlitten
- 54 Traverse
- 56 Längsführung
- 58 Gestell
- 60 erstes Umlenkmittel
- 62 zweites Umlenkmittel
- 64 erster Antriebsstrang
- 70 erstes Antriebsmittel
- 72 zweites Antriebsmittel
- 74 Greiferhalterung
- 76 Greiferarm
- 78 Vertikalgetriebe
- 80 zweiter Antriebsstrang
- 82 drittes Umlenkmittel
- 84 Viertel Umlenkmittel
- 85 drittes Antriebsmittel
- 86 Antriebsrolle

## Patentansprüche

1. Vorrichtung zur getakteten Überführung von Objekten (2) zu einer Abfördereinrichtung (30), umfassend
eine erste Transporteinrichtung (8), die zur Annahme von jeweils einer Gruppe (4), bestehend aus einer bestimmten Anzahl von Objekten (2) und zum Transport der Objekte (2) in eine erste Transportrichtung (14) und zur gesteuerten Abgabe der Objekte (2) an eine unter der ersten Transporteinrichtung (8) angeordnete zweite Transporteinrichtung (16) ausgebildet ist,
wobei die zweite Transporteinrichtung (16) mehrere parallel und nebeneinander angeordnete Transportbahnen (20) zum taktweisen Transport der Objekte (2) in einer quer zu der ersten Transportrichtung (14) angeordneten zweiten Transportrichtung (18) aufweist, wobei die Anzahl der Transportbahnen (20) größer als die oder gleich der bestimmten Anzahl von Objekten (2) je Gruppe (4) ist,
wobei die erste Transporteinrichtung (8) für jede Transportbahn (20) der zweiten Transporteinrichtung (16) mit einer gesteuerten Abgabeeinrichtung (24) zum Abgeben jeweils eines Objekts (2) von der ersten Transporteinrichtung (16) an eine bestimmte Transportbahn (20) der zweiten Transporteinrichtung (16) versehen ist,
wobei die zweite Transporteinrichtung (16) zum taktweisen Transport aller Transportbahnen (20) gleichzeitig um einen bestimmten Transportweg in der zweiten Transportrichtung (18) ausgebildet ist, nachdem von mindestens einer oder jeder Transportbahn (20) jeweils ein Objekt (2) aufgenommen worden ist, wobei taktweise ein Transport einer sich in der ersten Transportrichtung (14) erstreckenden Reihe von aufgenommenen Objekten (2) erfolgt, wobei die Reihe die bestimmte Anzahl von Objekten (2) in einer Gruppe (4) umfassen kann,
eine Abfördereinrichtung (30) zum Abfördern von Objekten (2), die über der zweiten Transporteinrichtung (16) angeordnet ist und für eine kontinuierliche oder getaktete Transportbewegung mit einer vorgegebenen Abfördergeschwindigkeit quer zu der zweiten Transportrichtung (18) ausgebildet ist, wobei die Abfördereinrichtung (30) mit schachtförmigen Aufnahmebereichen (32) zur Aufnahme jeweils eines Objekts (2) oder jeweils eines Stapels von Objekten (2) versehen ist,
eine in drei Raumrichtungen gesteuert verfahrbare Greifeinrichtung (50), die zum gleichzeitigen Ergreifen einer Gruppe (4) von quer zu der zweiten Transportrichtung (18) auf den Transportbahnen (20) der zweiten Transporteinrichtung (16) nebeneinander befindlichen Objekten (2) und zum Übergeben der Gruppe (4) von Objekten (2) auf einen Abschnitt der Abfördereinrichtung (30) unter Ausführen einer Bewegung entlang der Transportbewegung der Abfördereinrichtung (30) ausgebildet ist, wobei der Abschnitt eine der Anzahl von Objekten (2) je Gruppe von schachtförmigen Aufnahmebereichen (32) umfasst und die Greifeinrichtung (50) für eine einfache oder mehrfache Übergabe einer Gruppe (4) von Objekten (2) an den Abschnitt der Abfördereinrichtung (30) ausgebildet ist, so dass in den Aufnahmebereichen (32) der Abfördereinrichtung (30) entweder eine Reihe von nebeneinander befindlichen Objekte (2) oder eine Reihe von nebeneinander befindlichen Stapeln von Objekten (2) bildbar ist,eine Überführungssteuerung, die mit der ersten (8) und zweiten Transporteinrichtung (16) und der Greifeinrichtung (50) verbunden ist, zum Steuern der getakteten Überführung,
**dadurch gekennzeichnet, dass**
die Überführungssteuerung ausgebildet ist, um die von der ersten Transporteinrichtung (8) aufgenommenen Objekte (2) einer Gruppe (4) in einer vorgegebenen Reihenfolge den Abgabeeinrichtungen (24) zuzuordnen und jedes Objekt (2) bei Erreichen der ihm zugeordneten Abgabeeinrichtung (24) auf die zugeordnete Transportbahn (20) abzugeben.

2. Vorrichtung nach Anspruch 1, **dadurch gekennzeichnet, dass** die Vorrichtung zusätzlich eine Übergabeeinrichtung umfasst, die zum taktweisen Erfassen jeweils einer Gruppe (4) von Objekten (2) gleichzeitig an einem Abgabeende einer Anliefereinrichtung und zum taktweisen Übergeben jeweils einer Gruppe (4) von Objekten (2) an die erste Transporteinrichtung (8) ausgebildet ist.

3. Vorrichtung nach Anspruch 1 oder 2, **dadurch gekennzeichnet, dass** die Vorrichtung eine Erkennungseinrichtung zum Erkennen defekter Objekte (2) an der ersten Transporteinrichtung (8) umfasst, und eine über die Erkennungseinrichtung gesteuerte Abstosseinrichtung zum Entfernen defekter Objekte (2) von der ersten Transporteinrichtung (8), wobei die Überführungssteuerung so eingerichtet ist, dass die Abgabe verbleibender Objekte (2) einer Gruppe (4) an die zweite Transporteinrichtung (16) so gesteuert wird, dass durch die Entfernung defekter Objekte (2) entstehende Lücken an der ersten Transporteinrichtung (8) bei der Abgabe an die zweite Transporteinrichtung (16) übersprungen werden und durch auf der ersten Transporteinrichtung (8) folgende Objekte (2) ausgefüllt werden,wobei jede Transportbahn (20) der zweiten Transporteinrichtung (16) mit einem Objekt (2) belegt wird, bevor ein taktweiser Transport in der zweiten Transportrichtung (18) erfolgt.

4. Vorrichtung nach einem der vorangehenden Ansprüche, **dadurch gekennzeichnet, dass** die erste Transporteinrichtung (8), als Saug- oder Magnetgurt ausgebildet ist.

5. Vorrichtung nach einem der vorangehenden Ansprüche, **dadurch gekennzeichnet, dass** die Transportbahnen (20) der zweiten Transporteinrichtung (16) als Taschengurte ausgebildet sind, in denen durch Abstandselemente Taschen gebildet sind, um jeweils ein Objekt (2) aufzunehmen.

6. Vorrichtung nach einem der vorangehenden Ansprüche, **dadurch gekennzeichnet, dass** die Transportbahnen der zweiten Transporteinrichtung auf der der ersten Transporteinrichtung abgekehrten Seite der Abfördereinrichtung eine erste Abnahmereihe und eine in der zweiten Transportrichtung dahinter angeordnete zweite Abnahmereihe von Objekten bilden, von denen jeweils eine Anzahl oder Gruppe von Objekten mittels der Greifeinrichtung gleichzeitig entnehmbar sind.

7. Vorrichtung nach einem der vorangehenden Ansprüche, **dadurch gekennzeichnet, dass** zwischen der ersten Transporteinrichtung und der Abfördereinrichtung über der zweiten Transporteinrichtung eine Reihe von sich quer zu der zweiten Transportrichtung erstreckenden Pufferschächten angeordnet sind, deren Anzahl der Anzahl von Objekten einer Gruppe entsprechen kann und die jeweils zur Aufnahme eines Objekts oder eines Stapels von Objekten ausgebildet sind.

8. Vorrichtung nach einem der vorangehenden Ansprüche, **dadurch gekennzeichnet, dass** die Greifeinrichtung (50) einen in drei zueinander senkrechten Raumrichtungen (x,y,z) gesteuert verfahrbaren Greiferschlitten (52) umfasst, der entlang einer Traverse (54) linear in einer ersten Raumrichtung (x) längsverschieblich geführt ist, wobei die Traverse (54) linear in einer zweiten Raumrichtung (y) längsverschieblich an jeweils einer Längsführung (56) eines Gestells (58) geführt ist, wobei an der Traverse (54) jeweils endseitig zwei erste, in y-Richtung beabstandete Umlenkmittel (60) und an jeder Längsführung (56) jeweils endseitig ein zweites Umlenkmittel (62) angeordnet sind und ein endloser erster Antriebsstrang (64) in x-Richtung um die ersten Umlenkmittel (60) herum und in y-Richtung um die zweiten Umlenkmittel (62) herum geführt ist, wobei an der Traverse (54) ferner jeweils endseitig zwei dritte, in y-Richtung beabstandete Umlenkmittel (82) und an jeder Längsführung (56) jeweils endseitig ein viertes Umlenkmittel (84) angeordnet sind und ein endloser zweiter Antriebsstrang (80) in x-Richtung um die dritten Umlenkmittel (82) herum und in y-Richtung um die vierten Umlenkmittel (84) herumgeführt ist, wobei an dem Greiferschlitten (52) eine in der dritten Raumrichtung (z) gesteuert verfahrbare Greiferhalterung (74), geführt ist, an der ein Greiferarm (76) zum Ergreifen einer Gruppe (4) von Objekten (2) gehalten ist und die über ein Vertikalgetriebe (78) mit dem zweiten Antriebsstrang (80) gekoppelt und durch dessen Bewegung in der dritten Raumrichtung (z) verfahrbar ist, ein erstes gesteuertes Antriebsmittel (70) zum Antreiben des ersten Antriebsstrangs (64) im Bereich eines der zweiten Umlenkmittel (62) an einer Seite der Traverse (54), ein zweites gesteuertes Antriebsmittel (72) zum Antreiben des ersten Antriebsstrangs (64) im Bereich eines anderen der zweiten Umlenkmittel (62) an einer gegenüberliegenden Seite der Traverse (54), wobei ein synchron gleichsinniges Antreiben der Bereiche des ersten Antriebsstrangs (64) eine Bewegung des Greiferschlittens (52) relativ zu der Traverse (54) in x-Richtung und ein synchrones gegensinniges Antreiben eine Bewegung der Traverse (54) in y-Richtung bewirkt, ein drittes Antriebsmittel (85) zum Antreiben des zweiten Antriebsstrangs (80) und eine Greifersteuerung zum koordinierten Ansteuern der drei Antriebsmittel (70, 72, 85) und zum gezielten dreidimensionalen Verfahren des Greiferarms (76).

9. Vorrichtung nach einem der vorangehenden Ansprüche, **dadurch gekennzeichnet, dass** die Abfördereinrichtung (30) zum Transportieren der Aufnahmebereiche zu einer Verpackungs- oder Kartoniereinrichtung ausgebildet ist, von der jedes Objekt (2) oder jeder Stapel von Objekten (2) in eine Verpackung eingebracht wird und die Verpackung verschlossen wird.

10. Verwendung einer Überführungssteuerung zum Ausführen eines Verfahrens zum Überführen von Objekten (2) zu einer Abfördereinrichtung (30), mit den Schritten:
- Annehmen von jeweils einer Gruppe (4) bestehend aus einer bestimmten Anzahl von Objekten (2), mittels einer ersten Transporteinrichtung (8), und Transportieren der Objekte (2), in einer ersten Transportrichtung (14),
- Gesteuertes Abgeben der Objekte (2) an einer jeweils oberhalb einer jeden Transportbahn (20) angeordneten, gesteuerten Abgabeeinrichtung (24) nacheinander jeweils an eine Transportbahn (20) einer unter der ersten Transporteinrichtung (8) angeordneten zweiten Transporteinrichtung (16), die mehrere parallel und nebeneinander angeordnete Transportbahnen (20) aufweist, wobei die Anzahl der Transportbahnen (20) größer als die oder gleich der bestimmten Anzahl von Objekten (2) je Gruppe (4) ist,
- Zuordnen der von der ersten Transporteinrichtung (8) aufgenommenen Objekte (2) einer Gruppe (4) in einer vorgegebenen Reihenfolge den Abgabeeinrichtungen (24) und Abgeben eines jeden Objekts (2) bei Erreichen der ihm zugeordneten Abgabeeinrichtung (24) auf die zugeordnete Transportbahn (20),
- Taktweises Transportieren der Anzahl von Objekten (2) auf den Transportbahnen (20) der zweiten Transporteinrichtung (16) in einer quer zu der ersten Transportrichtung (14) weisenden zweiten Transportrichtung (18),
- Ergreifen der Anzahl von Objekten (2) auf der zweiten Transporteinrichtung (16) durch gezieltes Ansteuern einer Greifeinrichtung (50) und Ablegen der Anzahl von Objekten (2) auf einen Abschnitt der Abfördereinrichtung (30), die über der zweiten Transporteinrichtung (16) angeordnet ist und mit einer Abfördergeschwindigkeit in einer quer zu der zweiten Transportrichtung (18) weisenden Abförderrichtung (38) kontinuierlich oder getaktet angetrieben ist, wobei der Schritt des Ergreifens und Ablegens der Anzahl von Objekten (2) ein- oder mehrfach je Abschnitt der Abfördereinrichtung (30) ausgeführt wird, um auf der Abfördereinrichtung (30) eine sich in der Abförderrichtung (38) erstreckende Reihe von Objekten (2) oder eine Reihe von Stapeln von Objekten (2) zu bilden.

## Claims

1. Apparatus for the cyclical transfer of objects (2) to a discharge device (30), comprising
a first transport device (8) designed to in each case accept a group (4), consisting of a specified number of objects (2) and for transporting the objects (2) in a first transport direction (14) and for controlled delivery of the objects (2) to a second transport device (16) arranged under the first transport device (8), wherein the second transport device (16) has a plurality of transport paths (20) arranged in parallel and next to one another for the cyclical transport of the objects (2) in a second transport direction (18) arranged transverse to the first transport direction (14), wherein the number of transport paths (20) is greater than or equal to the specified number of objects (2) per group (4), wherein, for each transport path (20) of the second transport device (16), the first transport device (8) is provided with a controlled dispensing device (24) for dispensing in each case one object (2) from the first transport device (16) to a specified transport path (20) of the second transport device (16),
wherein the second transport device (16) for the cyclical transport of all transport paths (20) is simultaneously formed by a specified transport path in the second transport direction (18), after in each case one object (2) has been received by at least one or each transport path (20), wherein transport of a series of received objects (2) extending in the first transport direction (14) is carried out cyclically, wherein the series can comprise the specified number of objects (2) in a group (4),
a discharge device (30) for discharging objects (2), which is arranged above the second transport device (16) and is designed for a continuous or cyclical transport movement at a predetermined discharge speed transversely to the second transport direction (18), wherein the discharge device (30) is provided with shaft-shaped receiving regions (32) for receiving in each case one object (2) or in each case one stack of objects (2),
a gripping device (50), which can be moved in a controlled manner in three spatial directions and is designed for simultaneously gripping a group (4) of objects (2) which are situated next to each other transversely to the second transport direction (18) on the transport paths (20) of the second transport device (16) and for transferring the group (4) of objects (2) to a section of the discharge device (30) while carrying out a movement along the transport movement of the discharge device (30), wherein the section comprises one of the number of objects (2) per group of shaft-shaped receiving regions (32), and the gripping device (50) is designed for a single or multiple transfer of a group (4) of objects (2) to the section of the discharge device (30), such that either a series of adjacent objects (2) or a series of stacks of objects (2) situated next to one another can be formed in the receiving regions (32) of the discharge device (30), a transfer controller which is connected to the first (8) and second transport device (16) and the gripping device (50), in order to control the cyclical transfer,
**characterized in that**
the transfer controller is designed to assign the objects (2), received from the first transport device (8), of a group (4) in a predetermined sequence to the dispensing devices (24) and, upon reaching the dispensing device (24) assigned to it, to transfer each object (2) to the assigned transport path (20).

2. Apparatus according to Claim 1, **characterized in that** the apparatus additionally comprises a transfer device, which is designed for the cyclical detection of in each case one group (4) of objects (2) simultaneously at a delivery end of a delivery device and for the cyclical transfer of in each case one group (4) of objects (2) to the first transport device (8).

3. Apparatus according to Claim 1 or 2, **characterized in that** the apparatus comprises a detection device for detecting defective objects (2) on the first transport device (8), and a rejecting device controlled via the detection device for removing defective objects (2) from the first transport device (8), wherein the transfer controller is configured in such a way that the delivery of remaining objects (2) of a group (4) to the second transport device (16) is controlled in such a way that gaps arising from the removal of defective objects (2) at the first transport device (8) are skipped when delivered to the second transport device (16) and are filled by following objects (2) on the first transport device (8), wherein each transport path (20) of the second transport device (16) is occupied by an object (2) before cyclical transport in the second transport direction (18) takes place.

4. Apparatus according to one of the preceding claims, **characterized in that** the first transport device (8) is formed as a suction or magnetic belt.

5. Apparatus according to one of the preceding claims, **characterized in that** the transport paths (20) of the second transport device (16) are formed as pocket belts, in which pockets are formed by spacers in order to each receive an object (2).

6. Apparatus according to one of the preceding claims, **characterized in that** the transport paths of the second transport device form, on the side of the discharge device turned away from the first transport device, a first acceptance row and a second acceptance row arranged behind it in the second transport direction, of objects, from which a number or group of objects can be removed simultaneously by means of the gripping device in each case.

7. Apparatus according to one of the preceding claims, **characterized in that** a series of buffer shafts extending transversely to the second transport direction are arranged between the first transport device and the discharge device above the second transport device, the number of which buffer shafts can correspond to the number of objects of a group, and which buffer shafts are each designed to receive an object or a stack of objects.

8. Apparatus according to one of the preceding claims, **characterized in that** the gripping device (50) comprises: a gripper carriage (52), which can be moved in three mutually perpendicular spatial directions (x, y, z) in a controlled manner and which is guided along a crossmember (54) linearly in a first spatial direction (x) in a longitudinally displaceable manner, wherein the crossmember (54) is guided linearly in a second spatial direction (y) in a longitudinally displaceable manner on in each case one longitudinal guide (56) of a frame (58), wherein two first deflection means (60) spaced apart in the y-direction are each arranged on the end side on the crossmember (54), and a second deflection means (62) is arranged in each case on the end side on each longitudinal guide (56), and an endless first drive train (64) is guided in the x-direction around the first deflection means (60) and in the y-direction around the second deflection means (62), wherein, furthermore, two third deflection means (82) which are spaced apart in the y-direction are each arranged on the end side on the crossmember (54), and a fourth deflection means (84) is arranged in each case on the end side on each longitudinal guide (56), and an endless second drive train (80) is guided around the third deflection means (82) in the x-direction and around the fourth deflection means (84) in the y-direction, wherein a gripper holder (74), which can be moved in the third spatial direction (z) in a controlled manner, is guided on the gripper carriage (52), on which gripper holder a gripper arm (76) for gripping a group (4) of objects (2) is held, which gripper holder is coupled to the second drive train(80) via a vertical gear (78) and can be moved in the third spatial direction (z) by the movement of this gripper holder; a first controlled drive means (70) for driving the first drive train (64) in the region of one of the second deflection means (62) on one side of the crossmember (54); a second controlled drive means (72) for driving the first drive train (64) in the region of another of the second deflection means (62) on an opposite side of the crossmember (54), wherein driving of the regions of the first drive train (64) synchronously in the same direction brings about a movement of the gripper carriage (52) relative to the crossmember (54) in the x-direction, and driving synchronously in the opposite direction brings about a movement of the crossmember (54) in the y-direction; a third drive means (85) for driving the second drive train (80); and a gripper controller for coordinated actuating of the three drive means (70, 72, 85) and for targeted three-dimensional moving of the gripper arm (76).

9. Apparatus according to one of the preceding claims, **characterized in that** the discharge device (30) is designed for transporting the receiving regions to a packaging or cartoning device, by which each object (2) or each stack of objects (2) is introduced into a packaging and the packaging is closed.

10. Use of a transfer controller to carry out a method for transferring objects (2) to a discharge device (30), with the steps:
- accepting a group (4) each consisting of a specified number of objects (2), by means of a first transport device (8), and transporting the objects (2), in a first transport direction (14),
- controlled dispensing of the objects (2) at a controlled dispensing device (24), arranged in each case above each transport path (20), each in succession to a transport path (20) of a second transport device (16) which is arranged under the first transport device (8) and has a plurality of transport paths (20) arranged in parallel and next to one another, wherein the number of transport paths (20) is greater than or equal to the specified number of objects (2) per group (4),
- assigning the objects (2) of a group (4) received by the first transport device (8) in a predetermined sequence to the dispensing devices (24) and, upon reaching the dispensing device (24) assigned to it, dispensing each object (2) onto the assigned transport path (20),
- cyclically transporting the number of objects (2) on the transport paths (20) of the second transport device (16) in a second transport direction (18) pointing transversely to the first transport direction (14),
- gripping the number of objects (2) on the second transport device (16) by selectively actuating a gripping device (50), and depositing the number of objects (2) on a section of the discharge device (30), which is arranged above the second transport device (16) and is driven continuously or cyclically at a discharge speed in a discharge direction (38) transverse to the second transport direction (18), wherein the step of gripping and depositing the number of objects (2) is carried out one or more times per section of the discharge device (30), in order to form a series of objects (2) or a series of stacks of objects (2) on the discharge device (30) extending in the discharge direction (38).

## Revendications

1. Dispositif pour le transfert synchronisé d'objets (2) à un système d'évacuation (30), comprenant un premier système de transport (8), qui est formé pour recevoir respectivement un groupe (4), constitué d'un nombre déterminé d'objets (2) et pour transporter les objets (2) dans une première direction de transport (14) et pour distribuer de manière commandée les objets (2) à un deuxième système de transport (16) disposé sous le premier système de transport (8),
le deuxième système de transport (16) comportant plusieurs voies de transport (20) disposées parallèlement et côte à côte pour le transport cadencé des objets (2) dans une deuxième direction de transport (18) disposée transversalement à la première direction de transport (14), le nombre de voies de transport (20) étant supérieur ou égal au nombre déterminé d'objets (2) par groupe (4),
le premier système de transport (8) étant pourvu, pour chaque voie de transport (20) du deuxième système de transport (16), d'un système de distribution (24) commandé pour distribuer respectivement un objet (2) en provenance du premier système de transport (16) à une voie de transport (20) déterminée du deuxième système de transport (16),
le deuxième système de transport (16) étant formé pour le transport cadencé de toutes les voies de transport (20) simultanément d'un trajet de transport déterminé dans la deuxième direction de transport (18) après réception respectivement d'un objet (2) par au moins une ou chaque voie de transport (20), une rangée d'objets (2) reçus s'étendant dans la première direction de transport (14) étant transportée de manière cadencée, la rangée pouvant comprendre le nombre déterminé d'objets (2) dans un groupe (4),
un système d'évacuation (30) pour évacuer des objets (2), qui est disposé au-dessus du deuxième système de transport (16) et est formé pour un déplacement de transport continu ou cadencé à une vitesse d'évacuation spécifiée transversalement à la deuxième direction de transport (18), le système d'évacuation (30) étant pourvu de zones de réception (32) en forme de puits pour recevoir respectivement un objet (2) ou respectivement une pile d'objets (2),
un système de préhension (50) pouvant être déplacé de manière commandée dans trois directions spatiales, qui est formé pour saisir simultanément un groupe (4) d'objets (2) se trouvant côte à côte sur les voies de transport (20) du deuxième système de transport (16) transversalement à la deuxième direction de transport (18) et pour transférer le groupe (4) d'objets (2) sur une section du système d'évacuation (30) tout en exécutant un déplacement le long du déplacement de transport du système d'évacuation (30), la section comprenant un certain nombre du nombre d'objets (2) par groupe de zones de réception en forme de puits (32) et le système de préhension (50) étant formé pour un transfert simple ou multiple d'un groupe (4) d'objets (2) à la section du système d'évacuation (30), de telle sorte que soit une rangée d'objets (2) se trouvant côte à côte soit une rangée de piles d'objets (2) se trouvant côte à côte peut être formée dans les zones de réception (32) du système d'évacuation (30), une commande de transfert étant reliée au premier (8) et au deuxième système de transport (16) et au système de préhension (50) pour commander le transfert cadencé,
**caractérisé en ce que**
la commande de transfert est formée pour associer les objets (2) d'un groupe (4) reçu par le premier système de transport (8) aux systèmes de distribution (24) dans un ordre spécifié et pour distribuer chaque objet (2) sur la voie de transport (20) associée lorsque le système de distribution (24) qui lui est associé est atteint.

2. Dispositif selon la revendication 1, **caractérisé en ce que** le dispositif comprend en supplément un système de transfert, qui est formé pour la détection cadencée respectivement d'un groupe (4) d'objets (2) simultanément sur une extrémité de distribution d'un système de livraison et pour le transfert cadencé respectivement d'un groupe (4) d'objets (2) au premier système de transport (8).

3. Dispositif selon la revendication 1 ou 2, **caractérisé en ce que** le dispositif comprend un système de reconnaissance pour reconnaître des objets (2) défectueux sur le premier système de transport (8) et un système de rejet commandé par le système de reconnaissance pour retirer des objets (2) défectueux du premier système de transport (8), la commande de transfert étant mise au point de telle sorte que la distribution des objets (2) restants d'un groupe (4) au deuxième système de transport (16) est commandée de telle sorte que des espaces vides sur le premier système de transport (8) résultant du retrait d'objets (2) défectueux sont sautés lors de la distribution au deuxième système de transport (16) et sont comblés par des objets (2) suivant le premier système de transport (16), chaque voie de transport (20) du deuxième système de transport (8) étant occupée par un objet (2) avant d'effectuer un transport cadencé dans la deuxième direction de transport (18).

4. Dispositif selon l'une des revendications précédentes, **caractérisé en ce que** le premier système de transport (8) est formé comme une sangle aspirante ou magnétique.

5. Dispositif selon l'une des revendications précédentes, **caractérisé en ce que** les voies de transport (20) du deuxième système de transport (16) sont formées comme des sangles à compartiments, dans lesquelles des compartiments sont formés par des éléments d'écartement pour recevoir respectivement un objet (2).

6. Dispositif selon l'une des revendications précédentes, **caractérisé en ce que** les voies de transport du deuxième système de transport forment, sur le côté du système d'évacuation opposé au premier système de transport, une première rangée de prélèvement et une deuxième rangée de prélèvement d'objets disposée derrière dans la deuxième direction de transport, dont respectivement un certain nombre ou un groupe d'objets peuvent être enlevés simultanément respectivement au moyen du système de préhension.

7. Dispositif selon l'une des revendications précédentes, **caractérisé en ce qu'**est disposée, entre le premier système de transport et le système d'évacuation, au-dessus du deuxième système de transport, une rangée de puits tampons s'étendant transversalement à la deuxième direction de transport, dont le nombre peut correspondre au nombre d'objets d'un groupe et qui sont chacun formés pour recevoir un objet ou une pile d'objets.

8. Dispositif selon l'une des revendications précédentes, **caractérisé en ce que** le système de préhension (50) comprend un chariot de préhension (52) pouvant être déplacé de manière commandée dans trois directions spatiales (x, y, z) perpendiculaires les unes par rapport aux autres, qui est guidé de manière à pouvoir coulisser longitudinalement linéairement dans une première direction spatiale (x) le long de la traverse (54), la traverse (54) étant guidée linéairement dans une deuxième direction spatiale (y) de manière à pouvoir coulisser longitudinalement sur respectivement un guidage longitudinal (56) d'un cadre (58), deux premiers moyens de déviation (60) espacés dans la direction y étant disposés côté extrémité sur la traverse (54) et un deuxième moyen de déviation (62) étant disposé respectivement côté extrémité sur chaque guidage longitudinal (56) et une première chaîne cinématique sans fin (64) étant guidée autour du premier moyen de déviation (60) dans la direction x et autour des deuxièmes moyens de déviation (62) dans la direction y, deux troisièmes moyens de déviation (82) espacés dans la direction y étant disposés respectivement côté extrémité en outre sur la traverse (54) et un quatrième moyen de déviation (84) étant disposé respectivement côté extrémité sur chaque guidage longitudinal (56) et une deuxième chaîne cinématique sans fin (80) étant guidée autour des troisièmes moyens de déviation (82) dans la direction x et étant guidée autour du quatrième moyen de déviation (84) dans la direction y, un support de pince (74) pouvant être déplacé de manière commandée dans la troisième direction spatiale (z) étant guidé sur le chariot de préhension (52), sur lequel est maintenu un bras de préhension (76) destiné à saisir un groupe (4) d'objets (2) et qui est couplé à la deuxième chaîne cinématique (80) par un engrenage vertical (78) et qui peut être déplacé dans la troisième direction spatiale (z) par le mouvement de ladite deuxième chaîne cinématique, un premier moyen d'entraînement (70) commandé étant prévu pour entraîner la première chaîne cinématique (64) dans la zone d'un des deuxièmes moyens de déviation (62) sur un côté de la traverse (54), un deuxième moyen d'entraînement (72) commandé étant prévu pour entraîner la première chaîne cinématique (64) dans la zone d'un autre des deuxièmes moyens de déviation (62) sur un côté opposé de la traverse (54), un entraînement synchrone des zones de la première chaîne cinématique (64) dans le même sens entraînant un déplacement du chariot de préhension (52) par rapport à la traverse (54) dans la direction x et un entraînement synchrone dans le sens opposé entraînant un déplacement de la traverse (54) dans la direction y, un troisième moyen d'entraînement (85) étant prévu pour entraîner la deuxième chaîne cinématique (80) et une commande de préhension étant prévue pour piloter de manière coordonnée les trois moyens d'entraînement (70, 72, 85) et pour déplacer de manière tridimensionnelle ciblée le bras de préhension (76).

9. Dispositif selon l'une des revendications précédentes, **caractérisé en ce que** le système d'évacuation (30) est formé pour transporter les zones de réception vers un système d'emballage ou de mise en carton, par lequel chaque objet (2) ou chaque pile d'objets (2) est introduit(e) dans un emballage et l'emballage est fermé.

10. Utilisation d'une commande de transfert pour exécuter un procédé de transfert d'objets (2) vers un système d'évacuation (30), avec les étapes :
- acceptation de respectivement un groupe (4) constitué d'un nombre déterminé d'objets (2), au moyen d'un premier système de transport (8), et transport des objets (2) dans une première direction de transport (14),
- distribution commandée des objets (2) sur un système de distribution (24) commandé disposé respectivement au-dessus de chaque voie de transport (20), successivement respectivement à une voie de transport (20) d'un deuxième système de transport (16) disposé sous le premier système de transport (8), qui comporte plusieurs voies de transport (20) disposées parallèlement et côte à côte, le nombre des voies de transport (20) étant supérieur ou égal au nombre déterminé d'objets (2) par groupe (4),
- association des objets (2) d'un groupe (4) reçus par le premier système de transport (8) aux systèmes de distribution (24) dans un ordre spécifié et distribution de chaque objet (2) sur la voie de transport (20) associée lorsque le système de distribution (24) qui lui est associé est atteint,
- transport cadencé du nombre d'objets (2) sur les voies de transport (20) du deuxième système de transport (16) dans une deuxième direction de transport (18) pointant transversalement par rapport à la première direction de transport (14),
- saisie du nombre d'objets (2) sur le deuxième système de transport (16) par pilotage ciblé d'un système de préhension (50) et dépôt du nombre d'objets (2) sur une section du système d'évacuation (30), qui est disposé au-dessus du deuxième système de transport (16) et est entraîné en continu ou de manière cadencée à une vitesse d'évacuation dans une direction d'évacuation (38) pointant transversalement par rapport à la deuxième direction de transport (18), l'étape de la saisie et du dépôt du nombre d'objets (2) étant exécutée en une ou plusieurs fois par section du système d'évacuation (30) pour former sur le système d'évacuation (30) une rangée d'objets (2) s'étendant dans la direction d'évacuation (38) ou une rangée de piles d'objets (2).
